# EUROPÄISCHE PATENTANMELDUNG

(11) **EP 3 351 341 A1**
(43) Veröffentlichungstag der Anmeldung: **25.07.2018**
(21) Anmeldenummer: 17152629.6
(22) Anmeldetag: 23.01.2017
(51) Int. Cl.: B23K 26/40, B23H 9/00, B23H 9/10, B23H 9/14, F01D 5/14, B23K 26/382, B23K 101/00, B23K 103/18

(54) **VERFAHREN ZUR HERSTELLUNG EINES HOHLRAUMS IN EINER SCHAUFELPLATTFORM**

(71) Anmelder: Siemens Aktiengesellschaft, 80333 München (DE)
(72) Erfinder: Ahmad, Fathi, 41564 Kaarst (DE); Koch, Daniela, 10439 Berlin (DE); Lempke, Markus, 45468 Mülheim (DE); Mattheis, Thorsten, 45473 Mülheim (DE); Podschwadek, Axel, 45964 Gladbeck (DE); Radulovic, Radan, 44799 Bochum (DE); Weidenmüller, Anne, 40215 Düsseldorf (DE)

(57) **Zusammenfassung**

Die Erfindung betrifft ein Verfahren zur Herstellung eines Hohlraums (4) in einer Schaufelplattform (3) einer Schaufel (1), insbesondere einer Turbinenschaufel, als Teil eines Schaufelplattformkühlsystems, wobei das Verfahren die Schritte aufweist: Herstellen einer ersten Bohrung ausgehend von einer ersten Plattformseitenfläche (6) in Richtung einer gegenüberliegenden zweiten Plattformseitenfläche (7) unter Erzeugung einer ersten Öffnung (8) in der ersten Plattformseitenfläche (6) und fächerartiges Aufweiten der ersten Bohrung mittels eines Funkenerosionsverfahrens, insbesondere unter Verwendung einer draht- oder stabförmigen Elektrode, derart, dass die erzeugte erste Öffnung (8) der ersten Bohrung den Ausgangspunkt der fächerartigen Aufweitung darstellt. Ferner betrifft die Erfindung eine entsprechende Schaufel (1).

## Beschreibung

Die vorliegende Erfindung betrifft ein Verfahren zur Herstellung eines Hohlraums in einer Schaufelplattform einer Schaufel, insbesondere einer Turbinenschaufel, sowie eine Schaufel mit einem solchen Hohlraum.

Turbinenschaufeln einschließlich ihrer Schaufelblätter und Schaufelplattformen sind während ihres bestimmungsgemäßen Einsatzes in einer Gasturbine sehr hohen Temperaturen ausgesetzt. Entsprechend werden diese normalerweise unter Verwendung eines Kühlfluids gekühlt. Zur Kühlung von Schaufelplattformen müssen in diesen Hohlräume ausgebildet werden, durch die das eingesetzte Kühlfluid geleitet werden kann. Zur Herstellung solcher Hohlräume sind derzeit unterschiedliche Verfahren bekannt.

Zum einen können die Hohlräume bereits während des Gießprozesses von Schaufelplattformen unter Verwendung entsprechender Gießkerne erzeugt werden. Allerdings weist eine Schaufelplattform nach dem Gießprozess zwangsläufig eine Vielzahl mitunter sehr großer Öffnungen auf, die auf die notwendige Fixierung des Gießkerns innerhalb der Gießform zurückzuführen und zur nachträglichen Entfernung des Gießkernmaterials auch erforderlich sind. Nach dem Entfernen des Gießkernmaterials werden solche Öffnungen dann meist unter Einsatz eines Löt- oder Schweißverfahrens verschlossen oder zumindest derart verkleinert, dass während des bestimmungsgemäßen Einsatzes der Turbinenschaufel ein unkontrolliertes Austreten von Kühlfluid durch die Öffnungen verhindert wird. Ein Problem besteht allerdings dahingehend, dass Turbinenschaufeln einschließlich ihrer Plattformen häufig aus schwer löt- und schweißbaren, auf Nickel basierenden Superlegierungen hergestellt sind, weshalb sich ein Verschließen der Öffnungen meist schwierig gestaltet.

Alternativ können Hohlräume auch nachträglich in bereits gegossene Schaufelplattformen eingebracht werden, insbesondere unter Einsatz von Bohr- und/oder Funkenerosionsverfahren. Bei der Herstellung größerer Hohlräume, wie sie für eine ordnungsgemäße Kühlung einer Schaufelplattform erforderlich sind, gehen aber auch diese Verfahren normalerweise mit der Erzeugung verhältnismäßig großer Öffnungen einher, die ebenfalls löt- oder schweißtechnisch verschlossen werden müssen, weshalb sich eine ähnliche Problematik wie bei der gießtechnischen Herstellung von Hohlräumen ergibt.

Ausgehend von diesem Stand der Technik ist es eine Aufgabe der vorliegenden Erfindung, ein alternatives Verfahren der eingangs genannten Art zu schaffen, das die zuvor beschriebenen Nachteile zumindest teilweise beseitigt.

Zur Lösung dieser Aufgabe schafft die vorliegende Erfindung ein Verfahren zur Herstellung eines Hohlraums an einer Schaufelplattform einer Schaufel, insbesondere einer Turbinenschaufel als Teil eines Schaufelplattformkühlsystems, wobei das Verfahren die Schritte aufweist: a) Herstellen einer ersten Bohrung ausgehend von einer ersten Plattformseitenfläche in Richtung einer gegenüberliegenden zweiten Plattformseitenfläche unter Erzeugung einer ersten Öffnung in der ersten Plattformseitenfläche und b) fächerartiges Aufweiten der ersten Bohrung mittels eines Funkenerosionsverfahrens, insbesondere unter Verwendung einer draht- oder stabförmigen Elektrode, derart, dass die in Schritt a) erzeugte erste Öffnung der ersten Bohrung den Ausgangspunkt der fächerartigen Aufweitung darstellt.

Die in Schritt a) hergestellte Bohrung kann grundsätzlich mit jedem beliebigen Bohrverfahren hergestellt werden, wobei bevorzugt auch hier ein Funkenerosionsverfahren eingesetzt wird. Die sich in Schritt b) erfindungsgemäß anschließende fächerartige Aufweitung der ersten Bohrung derart, dass die in Schritt a) erzeugte erste Öffnung der ersten Bohrung den Ausgangspunkt der fächerartigen Aufweitung darstellt, führt dazu, dass ein großer Hohlraum erzeugt werden kann, während die erste Öffnung der ersten Bohrung nur geringfügig aufgeweitet wird. Eine derart kleine Bohrung kann auch bei schwer löt- und/oder schweißbaren Werkstoffen verhältnismäßig problemlos verschlossen werden. Sie kann aufgrund ihrer geringen Größe aber auch unverschlossen bleiben und insbesondere als Kühlfluidauslassöffnung für das durch den Hohlraum geleitete Kühlfluid dienen.

Gemäß einer ersten Ausgestaltung des erfindungsgemäßen Verfahrens wird in Schritt b) ausgehend von der ersten Öffnung der ersten Bohrung eine Vielzahl weiterer Bohrungen erzeugt, die jeweils einen vorbestimmten Winkelversatz zueinander aufweisen, wobei benachbart angeordnete Bohrungen einander bereichsweise überlappen. Auf diese Weise wird ausgehend von der ersten Öffnung der ersten Bohrung eine Vielzahl sich strahlenartig erstreckender und fluidtechnisch miteinander verbundenen Bohrungen erzeugt, die gemeinsam einen Hohlraum definieren.

Gemäß einer alternativen Ausgestaltung des erfindungsgemäßen Verfahrens wird in Schritt b) die in die erste Öffnung der ersten Bohrung eingeführte Elektrode fächerartig nach Art eines Scheibenwischers geschwenkt bzw. bewegt. Auf diese Weise wird ein kreissegmentförmiger und damit ebenfalls fächerartiger Hohlraum hergestellt.

Vorteilhaft gehen die Tiefe der ersten Bohrung und ggf. der weiteren Bohrungen jeweils über eine gedachte Mittelebene zwischen der ersten Plattformseitenfläche und der zweiten Plattformseitenfläche hinaus. Entsprechend erstreckt sich der ausgehend von der ersten Öffnung erzeugte Hohlraum über mehr als die Hälfte der Schaufelplattformbreite an entsprechender Stelle.

Gemäß einer Ausgestaltung des erfindungsgemäßen Verfahrens wird eine Bohrung hergestellt, die eine zweite Öffnung in der zweiten Plattformseitenfläche erzeugt und sich ausgehend von dieser zweiten Öffnung in Richtung der ersten Plattformseitenfläche erstreckt, wobei die Bohrung mittels eines Funkenerosionsverfahrens, insbesondere unter Verwendung einer Drahtelektrode, derart fächerartig aufgeweitet wird, dass die zweite Öffnung den Ausgangspunkt der fächerartigen Aufweitung darstellt. Die hier erzeugte Bohrung kann zeitgleich mit der in Schritt a) hergestellten Bohrung erzeugt werden, indem die in Schritt a) erzeugte Bohrung als eine Durchgangsbohrung ausgebildet wird, die sich von der ersten Plattformseitenfläche zu der gegenüberliegenden zweiten Plattformseitenfläche erstreckt, insbesondere senkrecht zur zuvor genannten Mittelebene der Schaufelplattform. Alternativ kann die hier erzeugte Bohrung aber auch als separate zweite Bohrung ausgehend von der zweiten Plattformseitenfläche in die Schaufelplattform eingebracht werden. Anschließend wird die Bohrung analog zu Schritt b) mittels eines Funkenerosionsverfahrens, insbesondere unter Verwendung einer Drahtelektrode, derart fächerartig aufgeweitet, dass die zweite Öffnung den Ausgangspunkt der fächerartigen Aufweitung darstellt.

Im Rahmen der fächerartigen Aufweitung wird ausgehend von der in der zweiten Plattformseitenfläche erzeugten zweiten Öffnung bevorzugt eine Vielzahl weiterer Bohrungen erzeugt, die jeweils einen vorbestimmten Winkelversatz zueinander aufweisen, wobei benachbart angeordnete Bohrungen einander bereichsweise überlappen. Alternativ kann im Rahmen der fächerartigen Aufweitung die ausgehend von der zweiten Öffnung in die Bohrung eingeführte Elektrode aber auch fächerartig geschwenkt werden. Beide Varianten wurden zuvor bereits erläutert, weshalb hierauf nicht erneut eingegangen wird.

Vorteilhaft gehen die Tiefe der Bohrung bzw. der Bohrungen jeweils über eine gedachte Mittelebene zwischen der zweiten Plattformseitenfläche und der ersten Plattformseitenfläche hinaus, so dass sich der ausgehend von der zweiten Öffnung erzeugte Hohlraum über mehr als die Hälfte der Schaufelplattformbreite erstreckt.

Insbesondere definieren die von den beiden Plattformseitenflächen durchgeführten fächerartigen Aufweitungen einen gemeinsamen Hohlraum, indem die beidseitig eingebrachten Bohrungen bzw. fächerartig aufgeweiteten Bereiche einander schneiden bzw. überlappen.

Die Schaufelplattform ist bevorzugt aus einer Superlegierung hergestellt, insbesondere aus einer auf Nickel basierenden Superlegierung.

Ferner schafft die vorliegende Erfindung zur Lösung der eingangs genannten Aufgabe eine Schaufel, insbesondere Turbinenschaufel, mit einem Schaufelblatt und zumindest einer mit dem Schaufelblatt verbundenen Schaufelplattform, in der zumindest ein Hohlraum ausgebildet ist, wobei der zumindest eine Hohlraum einen Teil eines Schaufelplattformkühlsystems bildet, dadurch gekennzeichnet, dass der Hohlraum entweder eine im Wesentlichen dreieckige oder eine im Wesentlichen rautenförmige oder eine im Wesentlichen sternförmige Außenkontur aufweist. Derartige Außenkonturen ergeben sich insbesondere, wenn der Hohlraum unter Einsatz des zuvor beschriebenen erfindungsgemäßen Verfahrens hergestellt wird.

Bevorzugt definiert zumindest einer der durch aufeinandertreffende Seitenwände des zumindest einen Hohlraums gebildeten Eckbereiche eine Öffnung in einer Plattformseitenfläche. Eine solche Öffnung ergibt sich automatisch bei der Herstellung des Hohlraums unter Einsatz des erfindungsgemäßen Verfahrens.

Gemäß einer Ausgestaltung der vorliegenden Erfindung ist der zumindest eine Hohlraum fluidtechnisch mit einem Schaufelblatthohlraum verbunden, der normalerweise ebenfalls einen Teil eines Schaufelplattformkühlsystems darstellt.

Vorteilhaft ist zumindest die Schaufelplattform aus einer Superlegierung hergestellt, insbesondere aus einer auf Nickel basierenden Superlegierung.

Weitere Merkmale und Vorteile der vorliegenden Erfindung werden anhand der nachfolgenden Beschreibung verschiedener Ausführungsformen erfindungsgemäßer Schaufeln und Verfahren unter Bezugnahme auf die beiliegende Zeichnung deutlich.

Darin ist
- Figur 1: eine schematische perspektivische Teilansicht einer Schaufelplattform einer Turbinenschaufel, in die ein Hohlraum als Teil eines Schaufelplattformkühlsystems eingebracht werden soll, wobei die Schaufelplattform durchsichtig dargestellt ist und die normalerweise verdeckten Linien gestrichelt gezeichnet sind;
- Figur 2: eine Ansicht entsprechend Figur 1, die einen Zustand nach Durchführung eines ersten Verfahrensschrittes eines erfindungsgemäßen Verfahrens zeigt;
- Figur 3: eine Ansicht entsprechend den Figuren 1 und 2, die eine Ansicht nach Durchführung eines zweiten Verfahrensschrittes des erfindungsgemäßen Verfahrens zeigt;
- Figur 4: eine Ansicht entsprechend den Figuren 1, 2 und 3, die eine Ansicht nach Durchführung eines dritten Verfahrensschrittes des erfindungsgemäßen Verfahrens zeigt;
- Figur 5: eine Draufsicht der in Figur 4 dargestellten Schaufelplattform;
- Figur 6: eine Draufsicht analog Figur 5, die eine alternative Form eines Hohlraums zeigt, der mit einem erfindungsgemäßen Verfahren herstellt wurde; und
- Figur 7: eine Draufsicht analog zu Figur 5, die noch eine weitere alternative Form eines Hohlraums zeigt, der mit einem erfindungsgemäßen Verfahren herstellt wurde.

Gleiche Bezugsziffern beziehen sich nachfolgend auf gleiche oder gleichartige Bauteile.

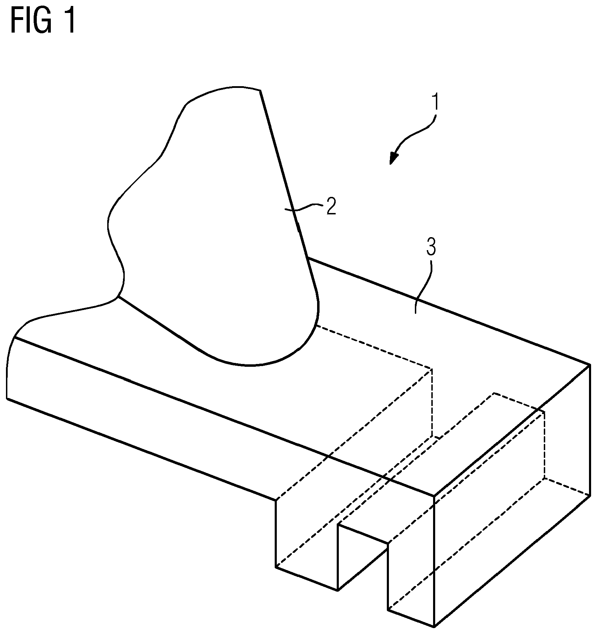

Die Figuren 1 bis 5 zeigen eine Schaufel 1, bei der es sich vorliegend um eine Turbinenschaufel handelt, genauer gesagt um eine Turbinenleitschaufel. Die Schaufel 1, die einteilig aus einer Superlegierung hergestellt ist, insbesondere aus einer solchen auf Nickelbasis, umfasst ein Schaufelblatt 2 und zumindest eine mit dem Schaufelblatt 2 verbundene Schaufelplattform 3.

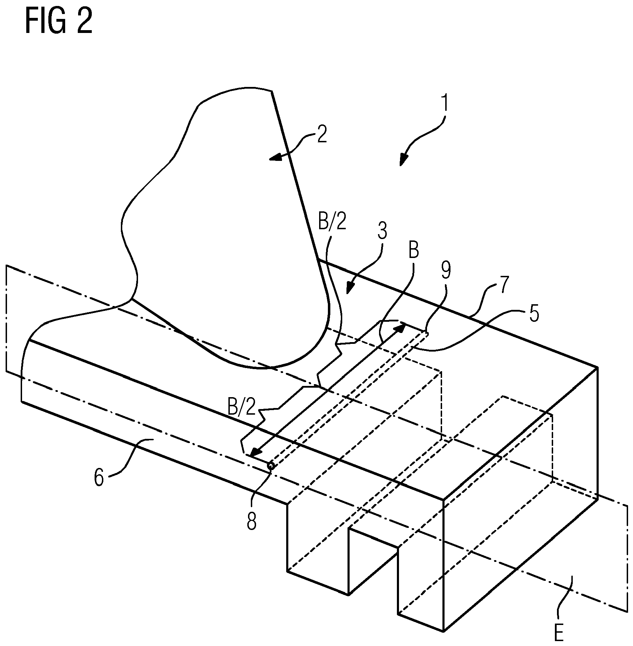

Zur Kühlung der Schaufelplattform 3 soll in den vorderen Bereich ein Hohlraum 4 eingebracht werden, der einen Teil eines Schaufelplattformkühlsystems bildet. Hierzu wird in einem ersten Schritt, wie es in Figur 2 dargestellt ist, eine erste Bohrung 5 ausgehend von einer ersten Plattformseitenfläche 6 in Richtung einer gegenüberliegenden zweiten Plattformseitenfläche 7 unter Erzeugung einer ersten Öffnung 8 in der ersten Plattformseitenfläche 6 und einer zweiten Öffnung 9 in der zweiten Plattformseitenfläche 7 hergestellt. Zur Einbringung der ersten Bohrung 5, die sich vorliegend senkrecht zu einer gedachten Mittelebene E zwischen der ersten und zweiten Plattformseitenfläche 6 und 7 erstreckt, kann grundsätzlich jedes geeignete Bohrverfahren eingesetzt werden. Im vorliegenden Fall wird ein Funkenerosionsverfahren mit draht- oder stabförmiger Elektrode 10 eingesetzt.

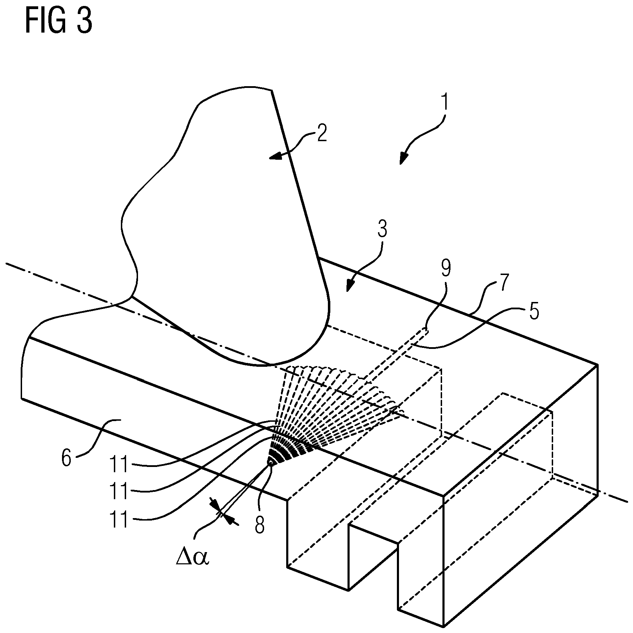

In einem zweiten Schritt wird die erste Bohrung 5 gemäß Figur 3 derart fächerartig aufgeweitet, dass die im ersten Schritt erzeugte erste Öffnung 8 der ersten Bohrung 5 den Ausgangspunkt der fächerartigen Aufweitung darstellt. Hierzu wird ausgehend von der ersten Öffnung 8 der ersten Bohrung 5 eine Vielzahl weiterer Bohrungen 11 erzeugt, die jeweils einen vorbestimmten Winkelversatz Δα in der Größenordnung von bevorzugt 0,5°-5° zueinander aufweisen, je nach Stärke der verwendeten Elektrode in Relation zum Winkelradius wobei benachbart angeordnete Bohrungen 5, 11 einander bereichsweise überlappen. Mit anderen Worten wird die Elektrode 10 immer wieder unter leicht verändertem Winkel durch die erste Öffnung 8 der ersten Bohrung 5 zur Erzeugung einer weiteren Bohrung 11 eingeführt, wobei die Tiefe der Bohrungen 11 jeweils über die Mittelebene E zwischen den beiden Plattformseitenflächen 6 und 7 hinausgeht. Auf diese Weise ergibt sich ein Teilhohlraum mit der in Figur 3 schematisch dargestellten fächer- oder kreissegmentartigen Form.

Ein Teilhohlraum mit analoger oder zumindest sehr ähnlicher Form kann alternativ auch erzielt werden, indem im Rahmen des zweiten Schrittes die in die erste Öffnung 8 der ersten Bohrung 5 eingeführte Elektrode 10 fächerartig geschwenkt wird. Entsprechend ist der entstehende Teilhohlraum nicht das Ergebnis einer Vielzahl von Einzelbohrungen sondern das Ergebnis einer scheibenwischerartigen Schwenkbewegung der Elektrode 10 um den Mittelpunkt der ersten Öffnung 8 als Schwenkpunkt.

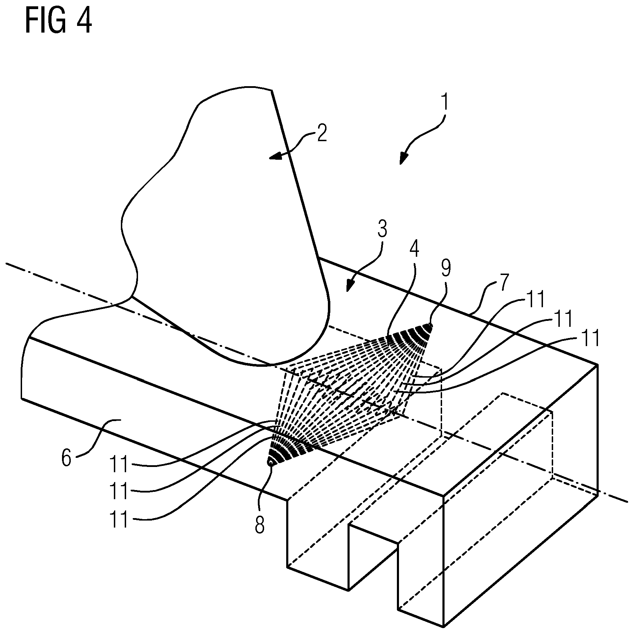

In einem dritten Schritt wird, wie es in Figur 4 dargestellt ist, in zum zweiten Schritt analoger Weise ein weiterer Teilhohlraum ausgehend von der zweiten Öffnung 9 der ersten Bohrung 5 hergestellt, also ausgehend von der zweiten Plattformseitenfläche 7, und zwar derart, dass sich die Bohrungen 11 der beiden Teilhohlräume kreuzen bzw. die Teilhohlräume einander überlappen. Insgesamt wird auf diese Weise ein Hohlraum 4 mit im Wesentlichen rautenförmiger Außenkontur erzeugt, der über die an der ersten Plattformseitenfläche 6 vorgesehene erste Öffnung 8 und die an der zweiten Plattformseitenfläche 7 vorgesehene zweite Öffnung 9 von außen zugänglich ist.

Die Öffnungen 8 und 9 können in einem sich anschließenden Schritt nach Bedarf verschlossen werden, insbesondere mittels Lötens oder Schweißens. Alternativ können sie jedoch auch als Kühlfluidaustrittsöffnungen zur Kühlung der Plattformseitenflächen 6 und 7 verbleiben.

Der Hohlraum 4 kann über die Ausbildung eines oder mehrerer Verbindungskanäle 12 mit einem Hohlraum des Schaufelblattes 2 verbunden werden, um insbesondere Kühlfluid von dem Inneren des Schaufelblattes 2 in den Hohlraum 4 der Schaufelplattform 3 und von dort über die Öffnungen 8 und 9 nach außen zu leiten.

Das zuvor beschriebene Verfahren zeichnet sich insbesondere dadurch aus, dass die beiden Öffnungen 8 und 9, die bei der Herstellung der ersten Bohrung 5 erzeugt werden, während der fächerartigen Aufweitung der ersten Bohrung 5 nicht wesentlich vergrößert werden. Sie bleiben verhältnismäßig klein. Ihr Durchmesser liegt nach der Herstellung des Hohlraums 4 bevorzugt im Bereich von 1 bis 5 mm Dank dieser geringen Größe ist ein Verschließen unter Einsatz eines Löt- oder Schweißverfahrens selbst bei schwer schweißbarem Werkstoff eher unproblematisch. Auch ist es aufgrund ihrer geringen Größe möglich, die Öffnungen 8 und 9 als Kühlfluidauslassöffnungen zu belassen, was bei den eingangs beschriebenen bekannten Verfahren zur Herstellung eines Hohlraums in einer Schaufelplattform undenkbar wäre.

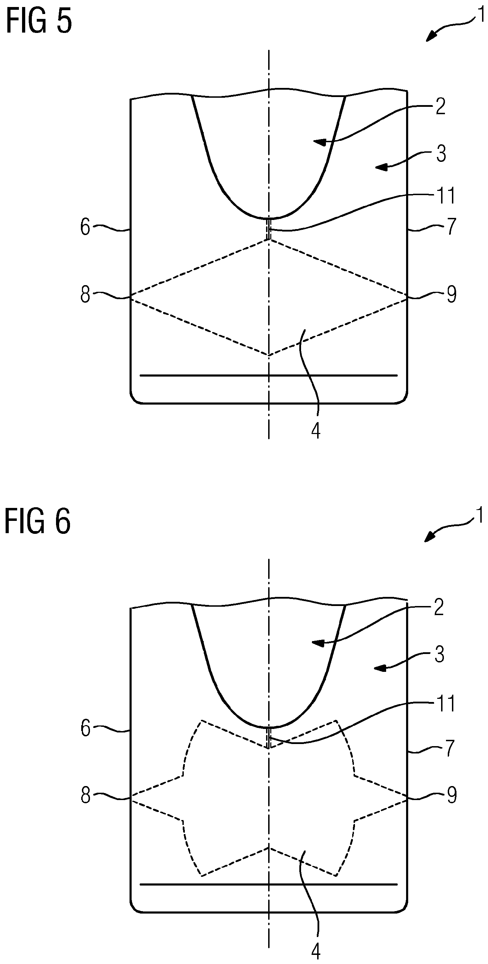

Figur 6 zeigt eine alternative Außenkontur des Hohlraums 4, die sich bei Durchführung der zuvor genannten Verfahrensschritte ergeben kann. Die Außenkontur des Hohlraums 4 in Figur 6 ist im Wesentlichen sternförmig, was darauf zurückzuführen ist, dass verglichen mit den Figuren 3 und 4 zur Aufweitung der ersten Bohrung 5 etwas längere Elektroden 10 verwendet wurden.

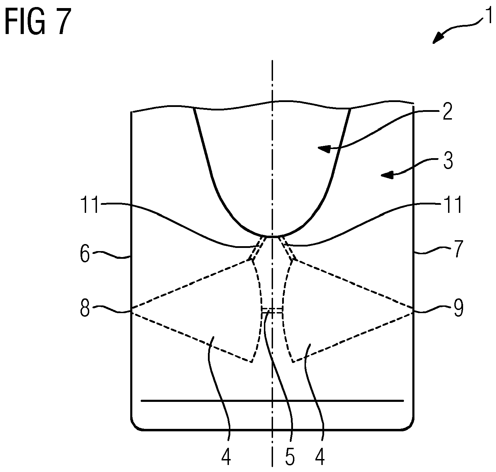

Figur 7 zeigt eine weitere mögliche Außenkontur von Hohlräumen 4, die mit den erfindungsgemäßen Verfahren hergestellt wurden. Die Konturen der Hohlräume 4 sind jeweils im Wesentlichen dreieckig, was darauf zurückzuführen ist, dass die beim Aufweiten der ersten Bohrung 5 verwendeten Elektroden 10 kürzer als die halbe Breite B/2 zwischen den Plattformseitenflächen 6 und 7 gewählt wurde.

Es sei darauf hingewiesen, dass die erste Bohrung 5 nicht unbedingt als Durchgangsbohrung ausgestaltet sein muss. Ebenso ist es möglich, anstelle einer durchgehenden ersten Bohrung 5 jeweils eine Anfangsbohrung sowohl ausgehend von der ersten Plattformseitenfläche 6 als auch von der zweiten Plattformseitenfläche 7 zu erzeugen, um daraufhin die beiden Bohrungen fächerförmig aufzuweiten.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zur Herstellung eines Hohlraums (4) in einer Schaufelplattform (3) einer Schaufel (1), insbesondere einer Turbinenschaufel, als Teil eines Schaufelplattformkühlsystems, wobei das Verfahren die Schritte aufweist:
a) Herstellen einer ersten Bohrung (5) ausgehend von einer ersten Plattformseitenfläche (6) in Richtung einer gegenüberliegenden zweiten Plattformseitenfläche (7) unter Erzeugung einer ersten Öffnung (8) in der ersten Plattformseitenfläche (6) und
b) fächerartiges Aufweiten der ersten Bohrung (5) mittels eines Funkenerosionsverfahrens, insbesondere unter Verwendung einer draht- oder stabförmigen Elektrode (10), derart, dass die in Schritt a) erzeugte erste Öffnung (8) der ersten Bohrung (5) den Ausgangspunkt der fächerartigen Aufweitung darstellt.

2. Verfahren nach Anspruch 1,
**dadurch gekennzeichnet, dass**
in Schritt b) ausgehend von der ersten Öffnung (8) der ersten Bohrung (5) eine Vielzahl weiterer Bohrungen (11) erzeugt wird, die jeweils einen vorbestimmten Winkelversatz (Δα) zueinander aufweisen, wobei benachbart angeordnete Bohrungen (5, 11) einander bereichsweise überlappen, oder dass in Schritt b) die in die erste Öffnung (8) der ersten Bohrung (5) eingeführte Elektrode (10) fächerartig geschwenkt wird.

3. Verfahren nach Anspruch 2,
**dadurch gekennzeichnet, dass**
die Tiefe der ersten Bohrung (5) und ggf. der weiteren Bohrungen (11) jeweils über eine gedachte Mittelebene (E) wischen der ersten Plattformseitenfläche (6) und der zweiten Plattformseitenfläche (7) hinausgehen.

4. Verfahren nach einem der vorhergehenden Ansprüche, **dadurch gekennzeichnet, dass**
eine Bohrung (5) hergestellt wird, die eine zweite Öffnung (9) in der zweiten Plattformseitenfläche (7) erzeugt und sich ausgehend von dieser zweiten Öffnung (9) in Richtung der ersten Plattformseitenfläche (6) erstreckt, und dass die Bohrung (5) mittels eines Funkenerosionsverfahrens, insbesondere unter Verwendung einer draht- oder stabförmigen Elektrode (10), derart fächerartig aufgeweitet wird, dass die zweite Öffnung (9) den Ausgangspunkt der fächerartigen Aufweitung darstellt.

5. Verfahren nach Anspruch 4,
**dadurch gekennzeichnet, dass**
im Rahmen der fächerartigen Aufweitung ausgehend von der in der zweiten Plattformseitenfläche (7) erzeugten zweiten Öffnung (9) eine Vielzahl weiterer Bohrungen (11) erzeugt wird, die jeweils einen vorbestimmten Winkelversatz (Δα) zueinander aufweisen, wobei benachbart angeordnete Bohrungen (5, 11) einander bereichsweise überlappen, oder dass im Rahmen der fächerartigen Aufweitung die ausgehend von der zweiten Öffnung (9) in die Bohrung (5) eingeführte Elektrode (10) fächerartig geschwenkt wird.

6. Verfahren nach Anspruch 5,
**dadurch gekennzeichnet, dass**
die Tiefe der Bohrung (5) bzw. der Bohrungen (5, 11) jeweils über eine gedachte Mittelebene (E) zwischen der zweiten Plattformseitenfläche (7) und der ersten Plattformseitenfläche (6) hinausgehen.

7. Verfahren nach einem der Ansprüche 4 bis 6,
**dadurch gekennzeichnet, dass**
die von den beiden Plattformseitenflächen (6, 7) durchgeführten fächerartigen Aufweitungen einen gemeinsamen Hohlraum (4) definieren.

8. Verfahren nach einem der vorhergehenden Ansprüche, **dadurch gekennzeichnet, dass**
zumindest die Schaufelplattform (3) aus einer Superlegierung hergestellt ist, insbesondere aus einer auf Nickel basierenden Superlegierung.

9. Schaufel (1), insbesondere Turbinenschaufel,
mit einem Schaufelblatt (2) und zumindest einer mit dem Schaufelblatt (2) verbundenen Schaufelplattform (3), in der zumindest ein Hohlraum (4) ausgebildet ist,
wobei der zumindest eine Hohlraum (4) einen Teil eines Schaufelplattformkühlsystems bildet,
**dadurch gekennzeichnet, dass**
die der Hohlraum (4) entweder eine im Wesentlichen dreieckige oder eine im Wesentlichen rautenförmige oder eine im Wesentlichen sternförmige Außenkontur aufweist.

10. Schaufel (1) nach Anspruch 9,
**dadurch gekennzeichnet, dass**
zumindest einer der durch aufeinandertreffende Seitenwände des zumindest einen Hohlraums (4) gebildeten Eckbereiche eine Öffnung (7, 8) in einer Plattformseitenfläche (6, 7) definiert.

11. Schaufel nach Anspruch 9 oder 10,
**dadurch gekennzeichnet, dass**
der zumindest eine Hohlraum (4) fluidtechnisch mit einem Schaufelblatthohlraum verbunden ist.

12. Schaufel nach einem der Ansprüche 9 bis 11,
**dadurch gekennzeichnet, dass**
zumindest die Schaufelplattform (3) aus einer Superlegierung hergestellt ist, insbesondere aus einer auf Nickel basierenden Superlegierung.
